# EUROPEAN PATENT SPECIFICATION

(11) **EP 2 790 454 B1**
(45) Date of publication and mention of the grant of the patent: **22.08.2018**
(21) Application number: 12854709.8
(22) Date of filing: 06.11.2012
(51) Int. Cl.: H04W 60/00, H04W 12/06

(54) **METHOD FOR ATTACHING E-UTRAN AND MOBILITY MANAGEMENT ENTITY**
VERFAHREN FÜR DEN ANSCHLUSS AN E-UTRAN UND MOBILITÄTSVERWALTUNGSEINHEIT
PROCÉDÉ POUR LE RATTACHEMENT À UN RÉSEAU E-UTRAN ET ENTITÉ DE GESTION DE LA MOBILITÉ CORRESPONDANTE

(30) Priority: 06.12.2011 CN 201110402126
(43) Date of publication of application: 15.10.2014
(73) Proprietor: Datang Mobile Communications Equipment Co., Ltd., Beijing 100083 (CN)
(72) Inventor: WU, Pengcheng, Beijing 100083 (CN)
(74) Representative: Herrmann, Uwe
(86) International application number: PCT/CN2012/084122
(87) International publication number: WO 2013/082984

(56) References cited:
- CN-A- 1 947 435
- CN-A- 1 997 208
- CN-A- 101 227 352
- CN-A- 101 466 083
- CN-A- 101 730 061
- CN-A- 102 438 330
- US-A1- 2005 130 659
- US-A1- 2007 140 252
- 3GPP: "3rd Generation Partnership Project; Technical Specification Group Services and System Aspects; General Packet Radio Service (GPRS) enhancements for Evolved Universal Terrestrial Radio Access Network (E-UTRAN) access (Release 9)", 3GPP TS 23.401 V9.4.0, 1 March 2010 (2010-03-01), XP055133494,
- RADISYS: "Protocol Signaling Procedures in LTE", INTERNET CITATION, 1 September 2011 (2011-09-01), pages 1-11, XP002695461, Retrieved from the Internet: URL:http://go.radisys.com/rs/radisys/image s/paper-lte-protocol-signaling.pdf [retrieved on 2013-04-15]
- Atte Lnsisalmi ET AL: "System Architecture Based on 3GPP SAE" In: "LTE for UMTS: OFDMA and SC-FDMA Based Radio Access", 16 January 2009 (2009-01-16), Wiley, XP055066008, ISBN: 978-0-47-099401-6 pages 23-66, DOI: 10.1002/9780470745489.ch3, * figure 3.5 *
- '3rd Generation Partnership Project; Technical Specification Group Services and System Aspects; General Packet Radio Service (GPRS) enhancements for Evolved Universal Terrestrial Radio Access Network (E-UTRAN) access (Release 9)' 3GPP TS 23.401 V9.4.0 March 2010, XP055133494

## Description

### Field of the Invention

The present invention relates to the field of communications and particularly to a method of attaching to an Evolved-Universal Terrestrial Radio Access Network (E-UTRAN) and a mobility management entity.

### Background of the Invention

As there is an increasingly high requirement of a user on the performance of a network, the user desires a shorter wait period of time for a user equipment to access the network, that is, the time delay as low as possible in an attach procedure of attaching to the network, to improve the performance of the Long Term Evolution (LTE)/System Architecture Evolution (SAE) network.

At present an Initial Attach procedure in an E-UTRAN involves the following sub-procedures: a sub-procedure 1 where the network side interacts with the User Equipment (UE) to perform identification, authentication, security verification and other processes; a sub-procedure 2 where a tunnel is established between the network side and the user equipment; and a sub-procedure 3 where a default bearer is established at the network side after the tunnel is established between the network side and the user equipment. As can be apparent from the foregoing, a total delay in the entire attach procedure is the sum of delays of the respective sub-procedures.

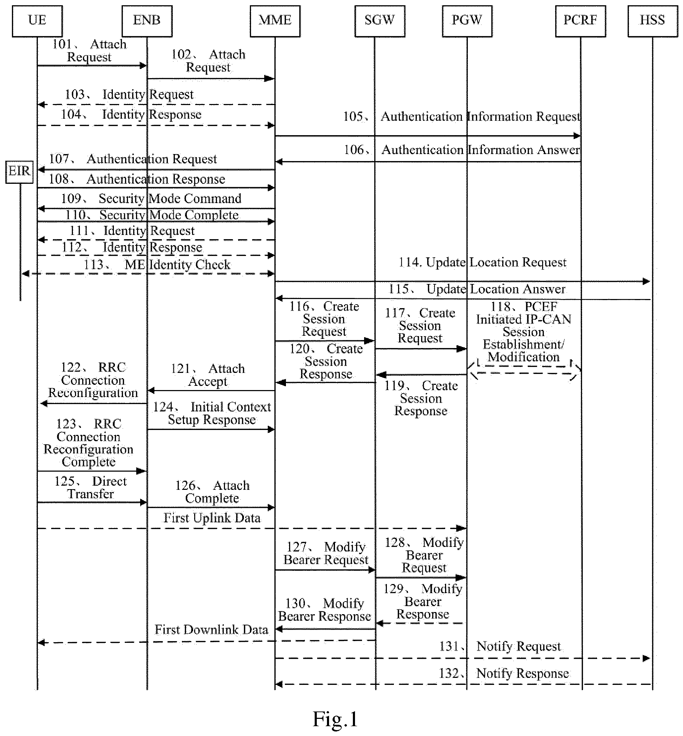

As described in the protocol, 3GPP:" 3rd Generation Partnership Project; Technical Specification Group Services and System Aspects; General Packet Radio Service (GPRS) enhancement for Evolved Universal Terrestrial Radio Access Network (E-UTRAN) access (Release 9)", 3GPP TS 23.401 V9.4.0, 1 March 2010 (2010-3-1), XP055133494, section 5.3.2, an attach procedure as illustrated in Fig.1 can be adopted in the case that there is no context information of the user equipment stored at the network side and an Attach Request sent by the user equipment carries no EPS session management information transfer flag or carries an EPS session management information transfer flag which is US 2007/140252 A1 and US 2005/130659 A1 both mentions that the call establishment step (comprising the tunnel establishment phase, also known as the PDP context establishment) and the authentication step are performed in parallel.

Reference is made to Fig.1 which is a flow chart of an attach procedure in which a user equipment is attached to the network side in the prior art, the following steps are involved:

In the step 101, the UE sends an Attach Request message and a network selection indication to an evolved NodeB (eNB), where the Attach Request carries a Temporary Mobile Subscriber Identity (TMSI) of the UE, a UE capability, a Packet Data Network (PDN) address and other parameters.

In the step 102, the eNB determines a corresponding Mobility Management Entity (MME) according to a Service-Temporary Mobile Subscriber Identity (S-TMSI) and the network selection indication in the received Attach Request message and forwards the Attach Request message to the determined MME.

In the step 102 above, if the eNB can not determine any corresponding MME according to the TMSI and the network selection indication in the Attach Request message, then the eNB selects an MME by an "MME selection function" and forwards the Attach Request message to the selected MME.

In the step 103, when the MME determines that the type of attachment initiated by the UE is attachment using an invalid Globally Unique Temporary UE Identity (GUTI) and there is no context information of the UE stored at the network side, the MME sends an Identity Request message to the UE.

In the step 104, the UE sends an Identity Response message to the MME upon reception of the Identity Request message sent by the MME, where the Identity Response message carries International Mobile Subscriber Identity (IMSI) information of the UE.

In the step 105, the MME sends an Authentication Information Request message to a Home Subscriber Server (HSS).

In the step 106, the HSS sends an Authentication Information Answer message to the MME upon reception of the Authentication Information Request message sent by the MME, where the Authentication Information Answer message carries multiple sets of authentication vectors.

In the step 107, the MME selects one set of authentication vectors from the received multiple sets of authentication vectors and sends an Authentication Request to the UE, where the Authentication Request carries the selected one set of authentication vectors.

In the step 108, the UE performs authentication on the one set of authentication vectors carried in the Authentication Request upon reception of the Authentication Request sent by the MME and sends an Authentication Response message to the MME upon successful authentication, where the Authentication Response message carries an Expected Response (XRES) parameter.

In the step 109, the MME compares the XRES parameter in the Authentication Response message with a locally stored XRES parameter upon reception of the Authentication Response message sent by the UE and determines successful authentication if they are consistent; and generates an integrity protection key and an encryption key using a key Kasme and sends a Security Mode Command to the UE, that is, initiates a security control procedure, upon successful authentication, where the Security Mode Command carries the integrity protection key and the encryption key.

In the step 110, the UE performs checking on the integrity protection key and the encryption key carried in the Security Mode Command upon reception of the Security Mode Command sent by the MME and sends a Security Mode Complete message to the MME, that is, completes the security control procedure, upon successful checking.

In the step 111, the MME sends an Identity Request message requesting for IMEI information of the UE to the UE, where the Identity Request message carries an identity type.

In the step 112, the UE determines a corresponding IMEI according to the identity type and sends an Identity Response message to the MME upon reception of the Identity Request message sent by the MME, wherein the Identity Response message carries the determined IMEI.

In the step 113, the MME performs an Mobile Equipment (ME) Identity Check procedure with an Equipment Identity Register (EIR) to judge whether to allow the UE for an access, and if the UE is allowed for an access, the flow proceeds to subsequent steps; or otherwise, the flow ends.

In the step 114, the MME sends an Update Location Request message to the HSS.

In the step 115, the HSS replies to the MME with an Update Location Answer (ACK) message, and if the MME determines from the Update Location Answer message that an update is rejected by the HSS, then the MME rejects the Attach Request of the UE, and the flow ends; or if the MME determines from the Update Location Answer message that the update is accepted by the HSS, then the MME accepts the Attach Request of the UE, and the flow proceeds to subsequent steps.

In the step 116, the MME selects a Serving Gateway (SGW) and sends a Create Session Request message to the selected SGW, where the Create Session Request message carries the IMSI, the ID of context information of the MME, the type of a Radio Access Technology (RAT), a default bearer Quality of Service (QoS), an allocated PDN address, an Aggregate Maximum Bit Rate (AMBR) and other parameters.

In the step 117, the SGW creates an entry in its list of Evolved Packet Core (EPC) bearers and forwards the received Create Session Request message to a PDN Gateway (PGW).

In the step 118, if there is a Policy Control and Charging Rule Function (PCRF) entity in use at the network side, then the PGW interacts with the PCRF entity to retrieve a Policy and Charging Control (PCC) rule which is a rule predefined in the PGW for a default Evolved Packet System (EPS) bearer to be established.

In the step 119, the PGW returns a Create Session Response message to the SGW, where the Create Session Response message carries a user-plane PGW address and Tunnel Endpoint Identifier (TEID), a control-plane PDN Gateway Tunnel Endpoint Identifier (PGW TEID), a PDN type, the PDN address, protocol configuration options, a charging ID, an Access Point Name (APN) restriction, a Cause value, an Access Point Name-Aggregate Maximum Bit Rate (APN-AMBR) and other parameters.

In the step 120, the SGW returns a Create Session Response message to the MME upon reception of the Create Session Response message sent by the PGW, where the Create Session Response message carries the PDN type, the PDN address, a user-plane SGW address and TEID, a control-plane SGW TEID, an EPS bearer identifier, the PGW address, etc.

In the step 121, the MME sends an Initial Context Setup Request message to the eNB, where an Attach Accept message is integrated in the Initial Context Setup Request message, and where if the MME allocates a new GUTI for the UE, then the Attach Accept message further carries a parameter of the new GUTI; and the Initial Context Setup Request message includes a security context of the UE, a list of handover restrictions, the bearer QoS parameter, the AMBR related PDN address information, QoS information of a bearer to be established.

In the step 122, the eNB sends a Radio Resource Control (RRC) Connection Reconfiguration message to the UE upon reception of the Attach Accept message sent by the MME and also sends an Attach Accept message to the UE, where the Attach Accept message carries the S-TMSI, the PDN address, a list of Track Areas (TAs), the PDN address information, etc.

In the step 123, the UE sends an RRC Connection Reconfiguration Complete message to the eNB.

In the step 124, the eNB sends an Initial Context Setup Response message to the MME, where the Initial Context Setup Response message carries a TEID of the eNB, downlink transmission address of the eNB on an S1-U interface, etc.

In the step 125, the UE sends a Direct Transfer message including an Attach Complete message to the eNB.

In the step 126, the eNB forwards the Attach Complete message included in the Direct Transfer message to the MME.

The UE transmits an uplink data packet to the SGW through the eNB according to the PDN address carried in the Attach Accept message, and further the SGW transmits the uplink data packet to the PGW according to a tunnel address.

In the step 127, the MME sends a Modify Bearer Request message to the SGW.

In the step 128, if the MME sends the Modify Bearer Request message carrying a Handover Indication to the SGW, then the SGW needs to send a Modify Bearer Request message to the PGW; otherwise, the flow proceeds directly to the following step 130.

In the step 129, the PGW replies to the SGW with a Modify Bearer Response message.

In the step 130, the SGW returns a Modify Bearer Response message to the MME, and at this time, the SGW can transmit buffered downlink packet data.

In the step 131, if the MME establishes an EPS bearer upon reception of the Modify Bearer Response message in the step S130, then the MME sends a Notify Request message for mobility management of the UE to the HSS, where the Notify Request message carries APN and PGW identifiers.

In the step 132, the HSS stores the APN and PGW identifiers carried in the Notify Request message and sends a Notify Response message to the MME to thereby complete the entire attach procedure.

At least 22 messages need to be exchanged in the existing attach procedure, and these 22 messages are exchanged respectively via S1, S11, S5/8, S6a and other interfaces; and at least 11 sub-procedures need to be performed throughout the flow to thereby complete the entire attach procedure.

At present the attach procedure as illustrated in Fig.1 is adopted in the case that there is no context information of the UE stored at the network side and the Attach Request sent by the user equipment carries no EPS session management information transfer flag or carries a EPS session management information transfer flag which is nevertheless not set; but all the steps in the attach procedure above are performed in series, thus resulting in a considerable time delay in that a total time delay in the attach procedure above is the sum of time delays occurred in the respective sub-procedures.

### Summary of the Invention

The invention relates to a method of attaching to an E-UTRAN operated at the network side a terminal device according to claim 1 and to a MME apparatus according to claim 11. Further embodiments are defined in the dependent claims of the problems of a considerable time delay and of low efficiency in the network attach procedure in the prior art, embodiments of the invention provide a method of attaching to an E-UTRAN and a mobility management entity so as to lower the time delay in attachment of a user equipment to the network and improve the efficiency of attachment.

A method of attaching to an Evolved-Universal Terrestrial Radio Access Network (E-UTRAN) includes:
a step A of retrieving at the network side context information of a user equipment upon reception of an Attach Request sent by the user equipment;
a step B of performing at the network side an authentication procedure and a security procedure with the user equipment;
a step C of establishing at the network side a tunnel with the user equipment for information transmission; and
a step D of establishing at the network side a default bearer with the user equipment,
wherein the step B and the step C are performed in parallel after the step A is
performed successfully; and the step D is performed upon determining that the step B and the step C are performed successfully;
wherein the step B and the step C include sub-steps; when any one of sub-steps in the step B is performed unsuccessfully, the step C and the step B are stopped from being further performed; and if any one of sub-steps in the step C is performed unsuccessfully, the step C and the step B are stopped from being performed.

A Mobility Management Entity (MME) includes a context information retrieval unit, an authentication and security unit, a tunnel establishment unit, a default bearer unit and a control unit, wherein:
the context information retrieval unit is configured to retrieve context information of a user equipment upon reception of an Attach Request sent by the user equipment;
the authentication and security unit is configured to perform an authentication procedure and a security procedure between the MME and the user equipment;
the tunnel establishment unit is configured to establish a tunnel with the user equipment for information transmission;
the default bearer unit is configured to establish a default bearer with the user equipment; and
the control unit is configured to start the authentication and security unit and the tunnel establishment unit for operation in parallel after the context information retrieval unit is operated successfully; and to start the default bearer unit for operation after both the authentication and security unit and the tunnel establishment unit are operated successfully,
the control unit is further configured to instruct the tunnel establishment unit to stop operation when the authentication and security unit is operated unsuccessfully; and
to instruct the authentication and security unit to stop operation when the tunnel establishment unit is operated unsuccessfully.

In the embodiments of the invention, context information of a user equipment is retrieved upon reception of an Attach Request sent by the user equipment, and then the following steps are performed in parallel: an authentication procedure and a security procedure with the user equipment are performed, and a tunnel is established with the user equipment for information transmission; and upon success, a default bearer is further established with the user equipment. With the inventive technical solution, after the context information of the user equipment is retrieved, the authentication procedure and the security procedure are performed in parallel, and the tunnel is established with the user equipment for information transmission, and thus the time delay in attachment of the user equipment to the network is lowered and the efficiency of attachment is improved to some extent as compared with the steps above performed in series in the prior art.

### Brief Description of the Drawings

Fig.1 is a flow chart of attachment signaling for attachment of a user equipment to a network in the prior art;
Fig.2 is a flow chart of a method of attaching a user equipment to a network in an embodiment of the invention;
Fig.3 is a flow chart of a method of retrieving context information of a user equipment in an embodiment of the invention;
Fig.4 is a first flow chart of a method of performing an authentication procedure and a security procedure between the network side and a user equipment in an embodiment of the invention;
Fig.5 is a second flow chart of a method of performing an authentication procedure and a security procedure between the network side and a user equipment in an embodiment of the invention;
Fig.6 is a first flow chart of a method of establishing a tunnel between the network side and a user equipment in an embodiment of the invention;
Fig.7 is a second flow chart of a method of establishing a tunnel between the network side and a user equipment in an embodiment of the invention;
Fig.8 is a first flow chart of a method of establishing a default bearer between the network side and a user equipment in an embodiment of the invention;
Fig.9 is a second flow chart of a method of establishing a default bearer between the network side and a user equipment in an embodiment of the invention;
Fig.10 is a signaling flow chart of attachment of a user equipment to a network in an embodiment of the invention; and
Fig.11 is a schematic structural diagram of a mobility management entity in an embodiment of the invention.

### Detailed Description of the Embodiments

The embodiments and/or examples of the following description which are not covered by the appended claims are considered as not being part of the present invention. Consideration is given to the problems of a considerable time delay and of low efficiency with a network attach procedure in the prior art in such an attachment scenario that a user equipment is attached using an IMSI or an invalid GUTI; there is no context information of the UE stored at the network side; and a PDN Connectivity message included in an Attach Request message initiated by the user equipment includes no EPS Session Management (ESM) Information Transfer (EIT) flag option or an EIT flag which is set to 0 (which indicates that there is no transmission to be encrypted). In view of this, embodiments of the invention provide a method of attaching to an E-UTRAN and a mobility management entity so as to lower the time delay in attachment of the user equipment to the network and improve the efficiency of attachment. In an embodiment of the invention, the method of attachment can include: the step A of retrieving at the network side context information of a user equipment upon reception of an Attach Request sent by the user equipment; the step B of performing at the network side an authentication procedure and a security procedure with the user equipment; the step C of establishing at the network side a tunnel with the user equipment for information transmission; and the step D of establishing at the network side a default bearer with the user equipment, where the step B and the step C are performed in parallel after the step A is performed successfully; and the step D is performed upon determining that the step B and the step C are performed successfully. With the inventive technical solution, since the step B and the step C are performed in parallel, the time delay in attachment of the user equipment to the network is shortened and the efficiency of attachment of the user equipment to the network is improved as compared with the step A and the step D performed in series in the prior art.

The inventive technical solution will be described below in details with reference to the drawings.

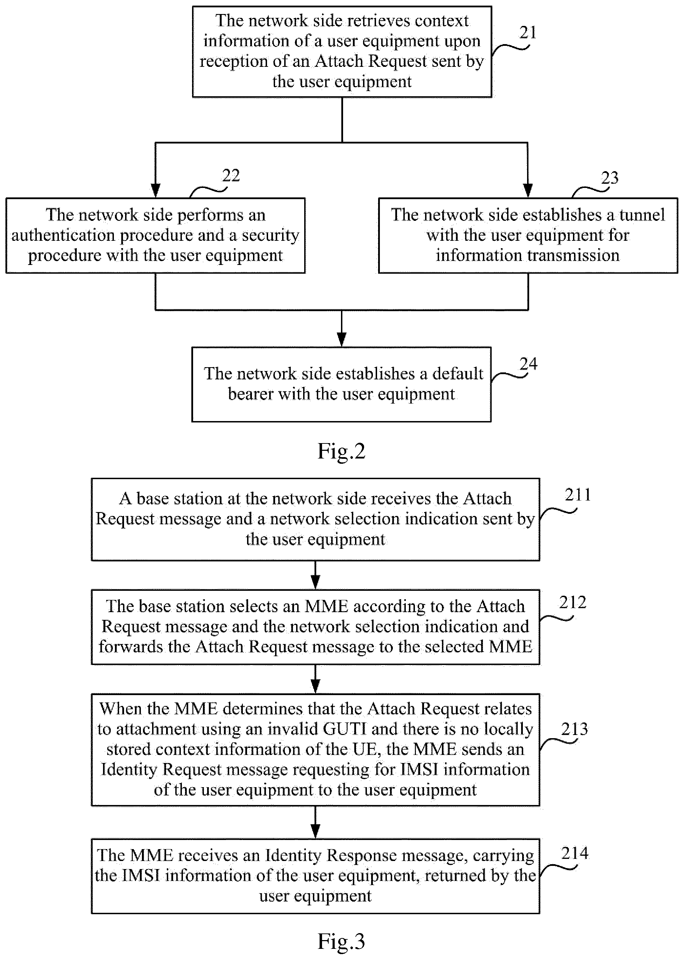

Referring to Fig.2 which is a flow chart of a method of attaching a user equipment to a network in an embodiment of the invention, the method includes the step 21 to the step 24, where the step 22 and the step 23 are performed in parallel after the step 21 is performed successfully, and the step 24 is performed after the step 22 and the step 23 are performed successfully:
In the step 21, the network side retrieves context information of a user equipment upon reception of an Attach Request sent by the user equipment.
In the step 22, the network side performs an authentication procedure and a security procedure with the user equipment.
In the step 23, the network side establishes a tunnel with the user equipment for information transmission.
In the step 24, the network side establishes a default bearer with the user equipment.

In the foregoing flow of the method, the step 21 particularly includes the following sub-steps as illustrated in Fig.3:

In the step 211, a base station at the network side receives the Attach Request message and a network selection indication sent by the user equipment.

The Attach Request message carries a TMSI, a UE capability, a PDN address and other parameters of the UE.

In the step 212, the base station selects an MME according to the Attach Request message and the network selection indication and forwards the Attach Request message to the selected MME.

In the step 213, when the MME determines that the Attach Request relates to attachment using an invalid GUTI and there is no locally stored context information of the UE, the MME sends an Identity Request message requesting for IMSI information of the user equipment to the user equipment.

In the step 214, the MME receives an Identity Response message, carrying the IMSI information of the user equipment, returned by the user equipment.

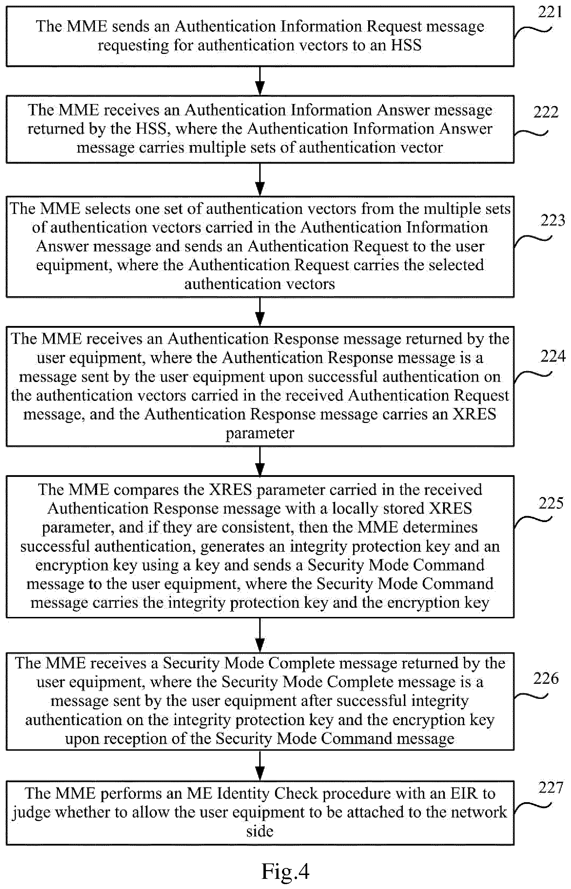

The step 22 can particularly include the following sub-steps as illustrated in Fig.4:
In the step 221, the MME sends an Authentication Information Request message requesting for authentication vectors to an HSS.

In the step 222, the MME receives an Authentication Information Answer message returned by the HSS, where the Authentication Information Answer message carries multiple sets of authentication vectors.

In the step 223, the MME selects one set of authentication vectors from the multiple sets of authentication vectors carried in the Authentication Information Answer message and sends an Authentication Request to the user equipment, where the Authentication Request carries the selected authentication vectors.

In the step 224, the MME receives an Authentication Response message returned by the user equipment, where the Authentication Response message is a message sent by the user equipment upon successful authentication on the authentication vectors carried in the received Authentication Request message, and the Authentication Response message carries an XRES parameter.

In the step 225, the MME compares the XRES parameter carried in the received Authentication Response message with a locally stored XRES parameter, and if they are consistent, then the MME determines successful authentication, generates an integrity protection key and an encryption key using a key and sends a Security Mode Command message to the user equipment, where the Security Mode Command message carries the integrity protection key and the encryption key.

In the step 226, the MME receives a Security Mode Complete message returned by the user equipment, where the Security Mode Complete message is a message sent by the user equipment after successful integrity authentication on the integrity protection key and the encryption key upon reception of the Security Mode Command message.

In the step 227, the MME performs an ME Identity Check procedure with an EIR to judge whether to allow the user equipment to be attached to the network side; and if not, then the flow ends; otherwise, the flow proceeds to subsequent steps.

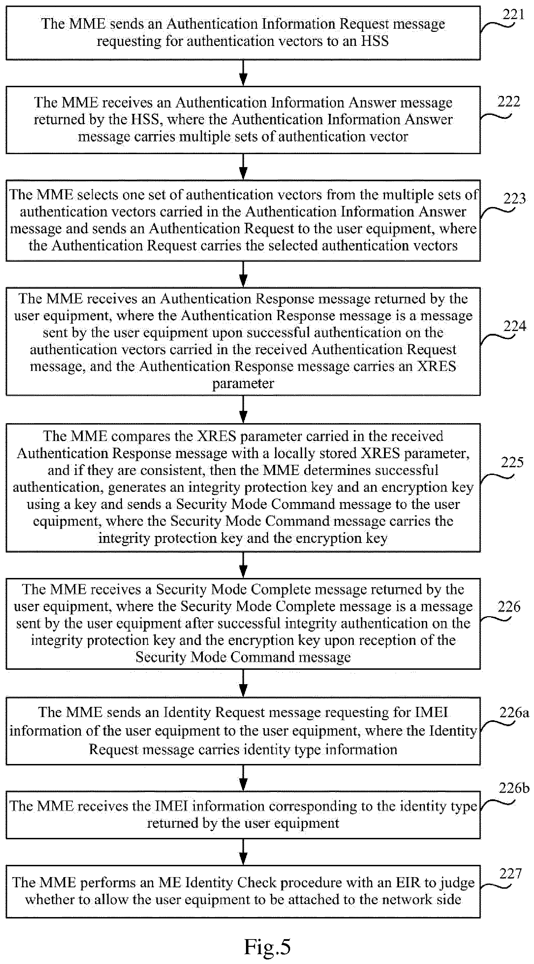

Preferably when the MME needs to retrieve IMEI information of the user equipment, the following sub-steps are further included between the step 226 and the step 227 as illustrated in Fig.5:
In the step 226a, the MME sends an Identity Request message requesting for IMEI information of the user equipment to the user equipment, where the Identity Request message carries identity type information.

In the step 226b, the MME receives the IMEI information corresponding to the identity type returned by the user equipment.

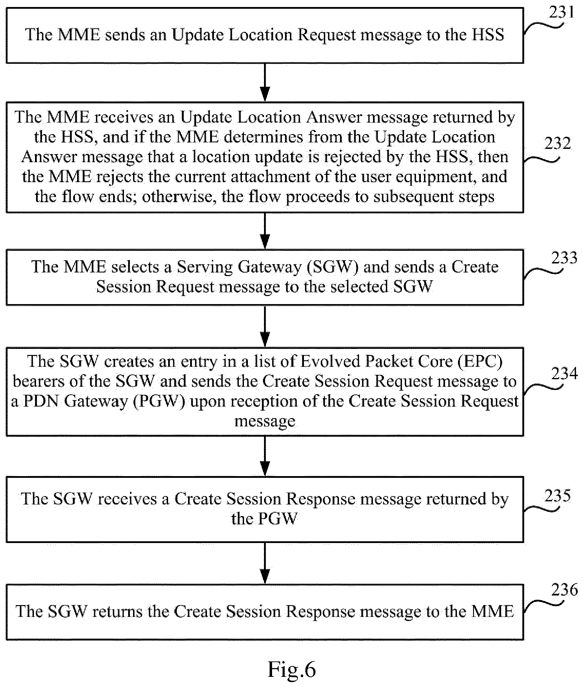

The step 23 in the flow can further particularly include the following sub-steps as illustrated in Fig.6:
In the step 231, the MME sends an Update Location Request message to the HSS.

In the step 232, the MME receives an Update Location Answer message returned by the HSS, and if the MME determines from the Update Location Answer message that a location update is rejected by the HSS, then the MME rejects the current attachment of the user equipment, and the flow ends; otherwise, the flow proceeds to subsequent steps.

In the step 233, the MME selects an SGW and sends a Create Session Request message to the selected SGW.

In the step 234, the SGW creates an entry in a list of EPC bearers of the SGW and sends the Create Session Request message to a PGW upon reception of the Create Session Request message.

In the step 235, the SGW receives a Create Session Response message returned by the PGW.

In the step 236, the SGW returns the Create Session Response message to the MME.

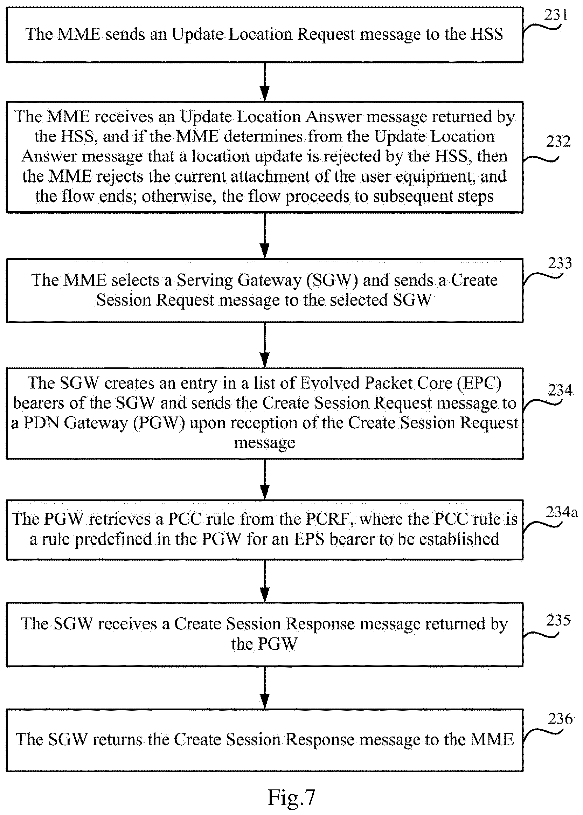

Preferably when there is a PCRF entity in use at the network side, the following sub-steps are further included between the step 234 and the step 235 as illustrated in Fig.7:

In the step 234a, the PGW retrieves a PCC rule from the PCRF entity, where the PCC rule is a rule predefined in the PGW for an EPS bearer to be established.

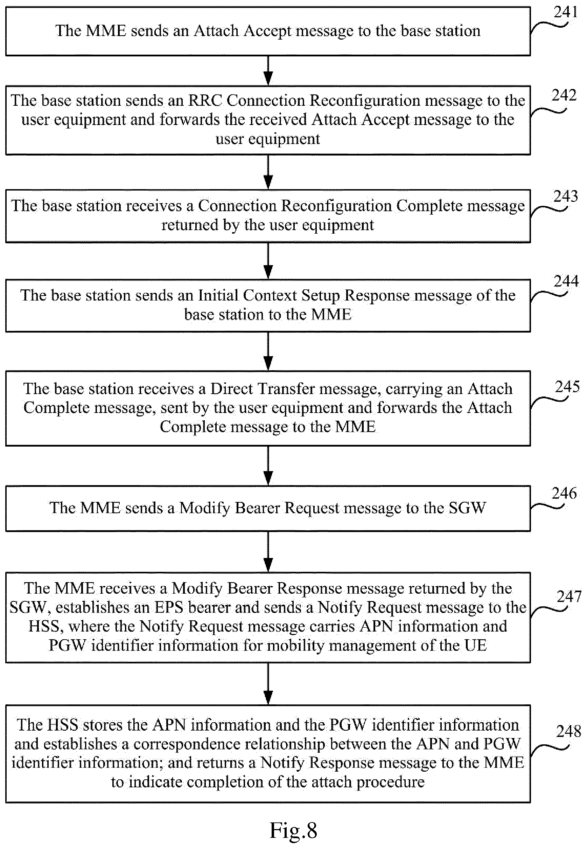

The step 24 in the flow can particularly include the following sub-steps as illustrated in Fig.8:
In the step 241, the MME sends an Attach Accept message to the base station.

In the step 242, the base station sends an RRC Connection Reconfiguration message to the user equipment and forwards the received Attach Accept message to the user equipment.

In the step 243, the base station receives a Connection Reconfiguration Complete message returned by the user equipment.

In the step 244, the base station sends an Initial Context Setup Response message of the base station to the MME.

In the step 245, the base station receives a Direct Transfer message, carrying an Attach Complete message, sent by the user equipment and forwards the Attach Complete message to the MME.

In the step 246, the MME sends a Modify Bearer Request message to the SGW.

In the step 247, the MME receives a Modify Bearer Response message returned by the SGW, establishes an EPS bearer and sends a Notify Request message to the HSS, where the Notify Request message carries APN information and PGW identifier information for mobility management of the UE.

In the step 248, the HSS stores the APN information and the PGW identifier information and establishes a correspondence relationship between the APN and PGW identifier information; and returns a Notify Response message to the MME to indicate completion of the attach procedure.

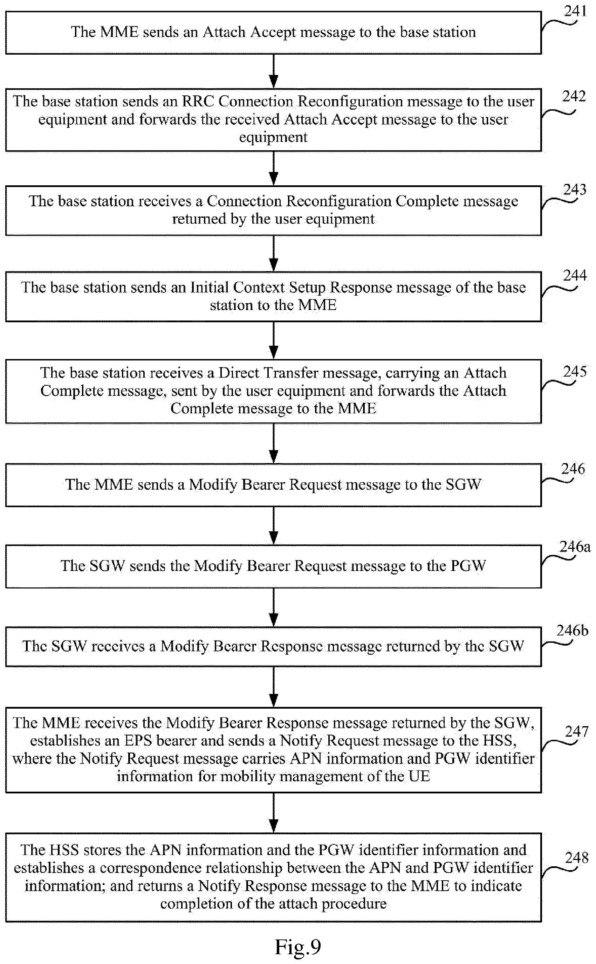

Preferably when the MME sends the Modify Bearer Request message carrying a Handover Indication to the SGW, the following sub-steps are further included between the step 246 and the step 247 as illustrated in Fig.9.

In the step 246a, the SGW sends the Modify Bearer Request message to the PGW.

In the step 246b, the SGW receives the Modify Bearer Response message returned by the SGW.

Preferably in order to ensure a success ratio for attachment of the user equipment to the network, in the embodiment of the invention, when any one of the sub-steps in the step 22 is performed unsuccessfully, neither the subsequent sub-steps in the step 22 nor the subsequent sub-steps in the step 23 will be performed; and preferably in order to ensure accurate establishment of a session, in the embodiment of the invention, when one of the sub-steps in the step 22 is performed unsuccessfully, if the sub-step 234 in the step 23 has been performed, then the MME sends a Delete Session Request respectively to the SGW and the PGW to instruct the SGW and the PGW to delete an established session, and sends an Attach Reject message to the user equipment; or if the sub-step 234 in the step 23 has not been performed, then the MME directly sends an Attach Reject message to the user equipment.

When any one of the sub-steps in the step 23 is performed unsuccessfully, neither the subsequent sub-steps in the step 22 nor the subsequent sub-steps in the step 23 will be performed. Preferably the MME sends the Attach Reject message to the user equipment, where the Attach Reject message carries a Cause value.

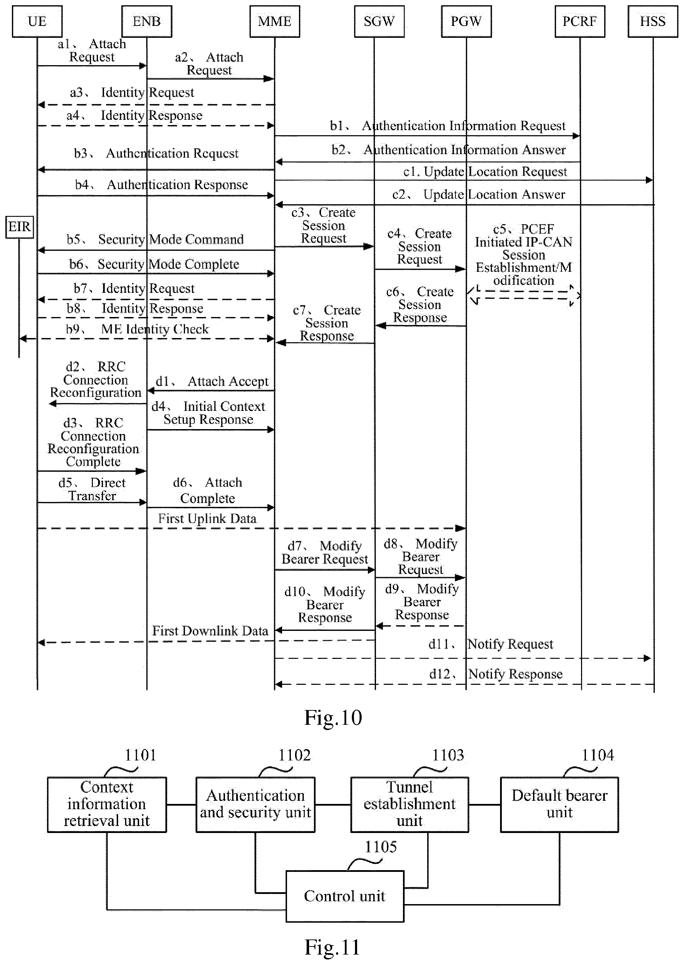

Based upon the flow of the method above, the embodiment of the invention further provides a signaling flow chart of attachment of the user equipment to the network, and the signaling flow chart can be as illustrated in Fig.10 and includes the step a1 to the step a4, the step b1 to the step b9, the step c1 to the step c7 and the step d1 to the step d12, where the step a1 to the step a4 are the sub-steps in the step 21 in Fig.2 and correspond to the step 211 to the step 214; the step b1 to the step b9 are the sub-steps in the step 22 in Fig.2 and correspond to the step 221 to the step 227; the step c1 to the step c7 are the sub-steps in the step 23 in Fig.2 and correspond to the step 231 to the step 236; and the step d1 to the step d12 are the sub-steps in the step 24 in Fig.2 and correspond to the step 241 to the step 248; and the step b1 to the step b9 and the step c1 to the step c7 are performed in parallel, and the step d1 to the step d12 are further performed after the step b1 to the step b9 and the step c1 to the step c7 are performed successfully; and this signaling flow is exemplified by the MME for which retrieval of IMEI information of the user equipment is required and the network side at which there is a PCRF in use.

In the step a1, a UE sends an Attach Request message and a network selection indication to an eNB, where the Attach Request message carries a TMSI, a UE capability, a PDN address and other parameters of the UE.

In the step a2, the eNB determines a corresponding MME according to the TMSI in the received Attach Request message and the network selection indication and forwards the Attach Request message to the determined MME.

In the step a3, when the MME determines that the type of attachment initiated by the UE is attachment using an invalid GUTI and there is no context information of the E stored at the network side, n the MME sends an Identity Request message to the UE.

In the step a4, the UE sends an Identity Response message to the MME upon reception of the Identity Request message sent by the MME, where the Identity Response message carries IMSI information of the UE.

In the step b1, the MME sends an Authentication Information Request message to an HSS.

In the step b2, the HSS sends an Authentication Information Answer message to the MME upon reception of the Authentication Information Request message sent by the MME, where the Authentication Information Answer message carries multiple sets of authentication vectors.

In the step b3, the MME selects one set of authentication vectors from the received multiple sets of authentication vectors and sends an Authentication Request to the UE, where the A Authentication Request carries the selected one set of authentication vectors.

In the step b4, the UE performs authentication on the one set of authentication vectors carried in the Authentication Request upon reception of the Authentication Request sent by the MME and sends an Authentication Response message to the MME upon successful authentication, where the. Authentication Response message carries an XRES parameter.

In the step b5, the MME compares the XRES parameter carried in the Authentication Response message with a locally stored XRES parameter upon reception of the Authentication Response message sent by the UE and determines successful authentication if they are consistent; and generates an integrity protection key and an encryption key using a key Kasme and sends a Security Mode Command message to the UE, that is, initiates a security control procedure, upon successful authentication, where the Security Mode Command message carries the integrity protection key and the encryption key.

In the step b6, the UE performs checking on the integrity protection key and the encryption key carried in the Security Mode Command message upon reception of the Security Mode Command message sent by the MME and sends a Security Mode Complete message to the MME, that is, completes the security control procedure, upon successful checking.

In the step b7, the MME sends an Identity Request message requesting for IMEI information of the UE to the UE, where the Identity Request message carries an identity type.

In the step b8, the UE determines a corresponding IMEI according to the identity type and sends an Identity Response message to the MME upon reception of the Identity Request message sent by the MME, wherein the Identity Response message carries the determined IMEI.

In the step b9, the MME performs an ME Identity Check procedure with an EIR to judge whether to allow the UE for an access, and if the UE is allowed for an access, the flow proceeds to subsequent steps; or otherwise, the flow ends.

In the step c1, the MME sends an Update Location Request message to the HSS.

In the step c2, the HSS replies to the MME with an Update Location Answer (ACK) message, and if the MME determines from the Update Location Answer message that an update is rejected by the HSS, then the MME rejects the Attach Request of the UE, and the flow ends; or if the MME determines from the Update Location Answer message that the update is accepted by the HSS, then the MME accepts the Attach Request of the UE, and the flow proceeds to subsequent steps.

In the step c3, the MME selects an SGW and sends a Create Session Request message to the selected SGW.

The Create Session Request message carries the IMSI, the ID of context information of the MME, RAT information, a default bearer QoS, an allocated PDN address, an AMBR and other parameters.

In the step c4, the SGW creates an entry in its list of EPC bearers and forwards the received Create Session Request message to a PGW.

In the step c5, the PGW interacts with a PCRF to retrieve a PCC rule which is a rule predefined in the PGW for a default EPS bearer to be established.

In the step c6, the PGW returns a Create Session Response message to the SGW.

The Create Session Response message carries a user-plane PGW address and TEID, a control-plane PGW TEID, a PDN type, the PDN address, protocol configuration options, a charging ID, a restriction, a Cause value, an APN-AMBR and other parameters.

In the step c7, the SGW returns a Create Session Response message to the MME upon reception of the Create Session Response message sent by the PGW, where the Create Session Response message carries the PDN type, the PDN address, a user-plane SGW address and TEID, a control-plane SGW TEID, an EPS bearer identifier, the PGW address, etc.

In the step d1, the MME sends an Attach Accept message to the eNB, where if the MME allocates a new GUTI for the UE, then the Attach Accept message further carries a GUTI parameter.

In the step d2, the eNB sends an RRC Connection Reconfiguration message to the UE upon reception of the Attach Accept message sent by the MME and also sends an Attach Accept message to the UE, where the Attach Accept message carries the S-TMSI, the PDN address, a list of TAs, the PDN address information, etc.

In the step d3, the UE sends an RRC Connection Reconfiguration Complete message to the eNB.

In the step d4, the eNB sends an Initial Context Setup Response message to the MME, where the Initial Context Setup Response message carries a TEID of the eNB, downlink transmission address of the eNB via an S1-U interface, etc.

In the step d5, the UE sends a Direct Transfer message including an Attach Complete message to the eNB.

In the step d6, the eNB forwards the Attach Complete message in the Direct Transfer message to the MME.

In the step d7, the MME sends a Modify Bearer Request message to the SGW.

In the step d8, if the MME sends the Modify Bearer Request message carrying a Handover Indication to the SGW, then the SGW needs to send a Modify Bearer Request message to the PGW.

In the step d9, the PGW replies to the SGW with a Modify Bearer Response message.

In the step d10, the SGW returns a Modify Bearer Response message to the MME, and at this time, the SGW can transmit buffered downlink packet data.

In the step d11, if the MME establishes an EPS bearer upon reception of the Modify Bearer Response message in the step d10, then the MME sends a Notify Request message for mobility management of the UE to the HSS, where the Notify Request message carries APN and PGW identifiers.

In the step d12, the HSS stores the APN and PGW identifiers carried in the Notify Request message and sends a Notify Response message to the MME to thereby complete the entire attach procedure.

Based upon the flow of the method above, an embodiment of the invention further provides a mobility management entity, where the mobility management entity can be structured as illustrated in Fig.11 and includes:
A context information retrieval unit 1101, an authentication and security unit 1102, a tunnel establishment unit 1103, a default bearer unit 1104 and a control unit 1105, where:
The context information retrieval unit 1101 is configured to retrieve context information of a user equipment upon reception of an Attach Request sent by the user equipment;
The authentication and security unit 1102 is configured to perform an authentication procedure and a security procedure between the MME and the user equipment;
The tunnel establishment unit 1103 is configured to establish a tunnel with the user equipment for information transmission;
The default bearer unit 1104 is configured to establish a default bearer with the user equipment; and
The control unit 1105 is configured to start the authentication and security unit 1102 and the tunnel establishment unit 1103 for operation in parallel after the context information retrieval unit 1101 is operated successfully; and to start the default bearer unit 1104 for operation after both the authentication and security unit 1102 and the tunnel establishment unit 1103 are operated successfully.

The context information retrieval unit 1101 is particularly configured:
To receive the Attach Request sent by the user equipment through a base station serving the user equipment;
To send an Identity Request message requesting for IMSI information of the user equipment to the user equipment upon determining that the Attach Request relates to attachment using an invalid GUTI and there is no locally stored context information of the UE; and
To receive an Identity Response message, carrying the IMSI information of the user equipment, returned by the user equipment.

Preferably the authentication and security unit 1102 configured to perform the authentication procedure between the MME and the user equipment is particularly configured:
To send an Authentication Information Request message requesting for authentication vectors to an HSS;
To receive an Authentication Information Answer message returned by the HSS, where the Authentication Information Answer message carries multiple sets of authentication vectors; and to select one set of authentication vectors from the multiple sets of authentication vectors and to send an Authentication Request to the user equipment, where the Authentication Request carries the selected authentication vectors; and
To receive an Authentication Response message returned by the user equipment, where the Authentication Response message is a message sent by the user equipment upon successful authentication on the authentication vectors carried in the received Authentication Request message, and the Authentication Response message carries an XRES parameter; and to compare the XRES parameter in the received Authentication Response message with a locally stored XRES parameter, and if they are consistent, to determine successful authentication; otherwise, to determine unsuccessful authentication.

The authentication and security unit 1102 configured to perform the security procedure between the MME and the user equipment is particularly configured:
To generate an integrity protection key and an encryption key using a key and to send a Security Mode Command message to the user equipment upon determining successful authentication, where the Security Mode Command message carries the integrity protection key and the encryption key; and
To receive a Security Mode Complete message returned by the user equipment, where the Security Mode Complete message is a message sent by the user equipment after successful integrity authentication on the integrity protection key and the encryption key upon reception of the Security Mode Command message; and to perform an ME Identity Check procedure with an EIR to judge whether to allow the user equipment to be attached to the network side.

Preferably the tunnel establishment unit 1103 is particularly configured:
To send an Update Location Request message to the HSS;
To receive an Update Location Answer message returned by the HSS and to send a Reject Attach Request message to the user equipment to the user equipment upon determining from the Update Location Answer message that a location update is rejected by the HSS; otherwise, to perform the following operations:
   To select a Serving Gateway (SGW) and to send a Create Session Request message to the selected SGW; and
   To receive a Create Session Response message returned by the SGW, where the Create Session Response message returned by the SGW is a Create Session Response message, returned by a PGW, received by the SGW after sending the Create Session Request message to the PGW after creating an entry in a list of Evolved Packet Core (EPC) bearers.
The default bearer unit 1104 is particularly configured:
   To send an Attach Accept message to the base station to instruct the base station to send an RRC Connection Reconfiguration message to the user equipment and to send the Attach Accept message to the user equipment;
   To receive an Initial Context Setup Response message and an Attach Compete message sent by the base station, where the Initial Context Setup Response message is a message sent by the base station upon reception of a Connection Reconfiguration Complete message returned by the user equipment; and the Attach Compete message is a message forwarded by the base station upon reception of a Direct Transfer message, carrying an Attach Complete message, sent by the user equipment;
   To send a Modify Bearer Request message to the SGW; and
   To receive a Modify Bearer Response message returned by the SGW, to establish an EPS bearer and to send a Notify Request message to the HSS, where the Notify Request message carries APN information and PGW identifier information for mobility management of the UE.

Preferably the control unit 1105 is further configured to instruct the tunnel establishment unit 1103 to stop operation when the authentication and security unit 1102 is operated unsuccessfully.

Preferably the control unit 1105 is further configured to determine whether the authentication and security unit 1102 has sent the Create Session Request message to the SGW before instructing the tunnel establishment unit 1103 to stop operation; and if so, to instruct the authentication and security unit 1102 to send a Delete Session Request to the SGW and to send a Reject Attach message to the user equipment; otherwise, to directly send a Reject Attach message to the user equipment.

Preferably the control unit 1105 is further configured to instruct the authentication and security unit 1102 to stop operation when the tunnel establishment unit 1103 is operated unsuccessfully.

Preferably the control unit 1105 is further configured to instruct the tunnel establishment unit 1103 to send a Reject Attach message to the user equipment, where the Reject Attach message carries a Cause value.

In the prior art, for the scenario where there is no context information of the UE at the network side and an Attach Request sent by the user equipment carries no EPS session management information transfer flag or carries an EPS session management information transfer flag which is nevertheless not set, retrieval of context information of the user equipment, an authentication procedure, a security procedure, establishment of a tunnel, a default bearer and other procedures are performed in series so that there is a considerable delay in their performance in series. The inventors have identified that the authentication procedure and the security procedure are performed between the MME and the eNB and between the MME and the UE via the S1 interface and the tunnel is established via the S11 and S5/S8 interfaces between the MME, the SGW and the PGW, so with the inventive technical solution, after the context information of the user equipment is retrieved, the authentication procedure and the security procedure are performed in parallel, and the tunnel is established with the user equipment for information transmission, and thus the time delay in attachment of the user equipment to the network is lowered and the efficiency of attachment is improved to some extent as compared with the steps above performed in series in the prior art.

The invention has been described in a flow chart and/or a block diagram of the method, the device (system) and the computer program product according to the embodiments of the invention. It shall be appreciated that respective flows and/or blocks in the flow chart and/or the block diagram and combinations of the flows and/or the blocks in the flow chart and/or the block diagram can be embodied in computer program instructions. These computer program instructions can be loaded onto a general-purpose computer, a specific-purpose computer, an embedded processor or a processor of another programmable data processing device to produce a machine so that the instructions executed on the computer or the processor of the other programmable data processing device create means for performing the functions specified in the flow(s) of the flow chart and/or the block(s) of the block diagram.

These computer program instructions can also be stored into a computer readable memory capable of directing the computer or the other programmable data processing device to operate in a specific manner so that the instructions stored in the computer readable memory create an article of manufacture including instruction means which perform the functions specified in the flow(s) of the flow chart and/or the block(s) of the block diagram.

These computer program instructions can also be loaded onto the computer or the other programmable data processing device so that a series of operational steps are performed on the computer or the other programmable data processing device to create a computer implemented process so that the instructions executed on the computer or the other programmable device provide steps for performing the functions specified in the flow(s) of the flow chart and/or the block(s) of the block diagram.

Although the preferred embodiments of the invention have been described, those skilled in the art benefiting from the underlying inventive concept can make additional modifications and variations to these embodiments. Therefore the appended claims are intended to be construed as encompassing the preferred embodiments and all the modifications and variations coming into the scope of the invention.

Evidently those skilled in the art can make various modifications and variations to the invention without departing from the scope of the invention. Thus the invention is also intended to encompass these modifications and variations thereto so long as the modifications and variations come into the scope of the claims appended to the invention.

## Claims

1. A method of attaching to an Evolved-Universal Terrestrial Radio Access Network (E-UTRAN), the method comprising:
a step A of retrieving at the network side context information of a user equipment upon reception of an Attach Request sent by the user equipment (21);
a step B of performing at the network side an authentication procedure and a security procedure with the user equipment (22);
a step C of establishing at the network side tunnels with the user equipment for information transmission (23); and
a step D of establishing at the network side a default bearer with the user equipment (24),
wherein the step D is performed upon determining that the step B and the step C are performed successfully;
**characterized in that**
the step B and the step C are performed in parallel after the step A is performed successfully,
the step B and the step C includes sub-steps,
when any one of sub-steps in the step B is performed unsuccessfully, the step C and the step B are stopped from being further performed; and
if any one of sub-steps in the step C is performed unsuccessfully, the step C and the step B are stopped from being performed.

2. The method according to claim 1, wherein the step A further comprises:
a step A1 of receiving, by a base station at the network side, the Attach Request and a network selection indication sent by the user equipment (211);
a step A2 of determining, by the base station, a Mobility Management Entity (MME) according to the Attach Request and the network selection indication and forwarding the Attach Request to the determined MME (212);
a step A3 of sending, by the MME, an Identity Request message requesting for International Mobile Subscriber Identity (IMSI) information of the user equipment to the user equipment when the MME determines that the Attach Request relates to attachment using an invalid Globally Unique Temporary UE Identity (GUTI) and there is no locally stored context information of the user equipment (213); and
a step A4 of receiving, by the MME, an Identity Response message, carrying the IMSI information of the user equipment, returned by the user equipment (214).

3. The method according to claim 2, wherein the step B further comprises:
a step B1 of sending, by the MME, an Authentication Information Request message requesting for authentication vectors to a Home Subscriber Server (HSS) (221);
a step B2 of receiving, by the MME, an Authentication Information Answer message returned by the HSS, wherein the Authentication Information Answer message carries multiple sets of authentication vectors (222);
a step B3 of selecting, by the MME, one set of authentication vectors from the multiple sets of authentication vectors carried in the Authentication Information Answer message and sending an Authentication Request to the user equipment, wherein the Authentication Request carries the selected one set of authentication vectors (223);
a step B4 of receiving, by the MME, an Authentication Response message returned by the user equipment, wherein the Authentication Response message is a message sent by the user equipment upon successful authentication on the selected one set of authentication vectors carried in the received Authentication Request message, and the Authentication Response message carries an Expected Response (XRES) parameter (224);
a step B5 of comparing, by the MME, the XRES parameter carried in the received Authentication Response message with a locally stored XRES parameter, and if they are consistent, then determining successful authentication, generating an integrity protection key and an encryption key using a key and sending a Security Mode Command message to the user equipment, wherein the Security Mode Command message carries the integrity protection key and the encryption key (225);
a step B6 of receiving, by the MME, a Security Mode Complete message returned by the user equipment, wherein the Security Mode Complete message is a message sent by the user equipment after successful integrity authentication on the integrity protection key and the encryption key upon reception of the Security Mode Command message (226);
a step B7 of performing, by the MME, an Mobile Equipment (ME) Identity Check procedure with an Equipment Identity Register (EIR) to judge whether to allow the user equipment to be attached to the network side (227).

4. The method according to claim 3, wherein between the step B6 and the step B7, the method further comprises:
a step B61 of sending, by the MME, an Identity Request message requesting for International Mobile Equipment Identity (IMEI) information of the user equipment to the user equipment, wherein the Identity Request message carries identity type information (226a); and
a step B62 of receiving, by the MME, the IMEI information corresponding to the identity type information returned by the user equipment (226b).

5. The method according to claim 3, wherein the step C further comprises:
a step C1 of sending, by the MME, an Update Location Request message to the HSS (231);
a step C2 of receiving, by the MME, an Update Location Answer message returned by the HSS, and if the MME determines from the Update Location Answer message that a location update is rejected by the HSS, then rejecting, by the MME, current attachment of the user equipment, and stopping from proceeding; otherwise, proceeding to subsequent steps (232);
a step C3 of selecting, by the MME, a Serving Gateway (SGW) and sending a Create Session Request message to the selected SGW (233);
a step C4 of creating, by the SGW, an entry in a list of Evolved Packet Core (EPC) bearers of the SGW and sending the Create Session Request message to a PDN Gateway (PGW) upon reception of the Create Session Request message (234);
a step C5 of receiving, by the SGW, a Create Session Response message returned by the PGW (235); and
a step C6 of returning, by the SGW, the Create Session Response message to the MME (236).

6. The method according to claim 5, wherein when there is a Policy Control and Charging Rule Function (PCRF) entity in use at the network side, the method further comprises between the step C4 and the step C5,:
a step C41 of retrieving, by the PGW, a Policy and Charging Control (PCC) rule from the PCRF entity, wherein the PCC rule is a rule predefined in the PGW for an EPS bearer to be established (234a).

7. The method according to claim 5, wherein the step D further comprises:
a step D1 of sending, by the MME, an Attach Accept message to the base station (241);
a step D2 of sending, by the base station, a Radio Resource Control (RRC) Connection Reconfiguration message to the user equipment and forwarding the received Attach Accept message to the user equipment (242);
a step D3 of receiving, by the base station, a Connection Reconfiguration Complete message returned by the user equipment (243);
a step D4 of sending, the base station, an Initial Context Setup Response message of the base station to the MME (244);
a step D5 of receiving, by the base station, a Direct Transfer message, carrying an Attach Complete message, sent by the user equipment and forwarding the Attach Complete message to the MME (245);
a step D6 of sending, by the MME, a Modify Bearer Request message to the SGW (246);
a step D7 of receiving, by the MME, a Modify Bearer Response message returned by the SGW, establishing an EPS bearer and sending a Notify Request message to the HSS, wherein the Notify Request message carries Access Point Name (APN) information and PGW identifier information for mobility management of the UE (247);
a step D8 of storing, by the HSS, the APN information and the PGW identifier information and establishing a correspondence relationship between the APN information and PGW identifier information; and returning a Notify Response message to the MME to indicate completion of the current attachment (248).

8. The method according to claim 7, wherein when the MME sends the Modify Bearer Request message carrying a Handover Indication to the SGW, the method further comprises between the step D6 and the step D6:
a step D61 of sending, by the SGW, the Modify Bearer Request message to the PGW (246a);
a step D62 of receiving, by the SGW, the Modify Bearer Response message returned by the SGW (246b).

9. The method according to claim 5, wherein before the step C is stopped from being performed, if the step C4 has been performed, then the MME sends a Delete Session Request respectively to the SGW and the PGW to instruct the SGW and the PGW to delete an established session, and sends an Attach Reject message to the user equipment; and
before the step C is stopped from being performed, if the step C4 has not been performed, then the MME directly sends an Attach Reject message to the user equipment.

10. The method according to claim 5, wherein the MME sends the Attach Reject message to the user equipment, wherein the Attach Reject message carries a Cause value.

11. A Mobility Management Entity (MME), the MME comprising a context information retrieval unit, an authentication and security unit, a tunnel establishment unit, a default bearer unit and a control unit, wherein:
the context information retrieval unit (1101) is configured to retrieve context information of a user equipment upon reception of an Attach Request sent by the user equipment;
the authentication and security unit (1102) is configured to perform an authentication procedure and a security procedure between the MME and the user equipment;
the tunnel establishment unit (1103) is configured to establish tunnels with the user equipment for information transmission;
the default bearer unit (1104) is configured to establish a default bearer with the user equipment; and
to start the default bearer unit for operation after both the authentication and security unit and the tunnel establishment unit are operated successfully;
**characterized in that**
the control unit (1105) is configured to start the authentication and security unit and the tunnel establishment unit for operation in parallel after the context information retrieval unit is operated successfully;
the control unit (1105) is further configured to instruct the tunnel establishment unit (1103) to stop operation when the authentication and security unit (1102) is operated unsuccessfully; and
to instruct the authentication and security unit (1102) to stop operation when the tunnel establishment unit (1103) is operated unsuccessfully.

12. The mobility management entity according to claim 11, wherein the context information retrieval unit (1101) is further configured:
to receive the Attach Request sent by the user equipment through a base station serving the user equipment;
to send an Identity Request message requesting for International Mobile Subscriber Identity (IMSI) information of the user equipment to the user equipment upon determining that the Attach Request relates to attachment using an invalid Globally Unique Temporary UE Identity (GUTI) and there is no locally stored context information of the user equipment; and
to receive an Identity Response message, carrying the IMSI information of the user equipment, returned by the user equipment.

13. The mobility management entity according to claim 12, wherein the authentication and security unit (1102) configured to perform the authentication procedure between the MME and the user equipment is further configured:
to send an Authentication Information Request message requesting for authentication vectors to a Home Subscriber Server (HSS);
to receive an Authentication Information Answer message returned by the HSS, wherein the Authentication Information Answer message carries multiple sets of authentication vectors; and to select one set of authentication vectors from the multiple sets of authentication vectors and to send an Authentication Request to the user equipment, wherein the Authentication Request carries the selected one set of authentication vectors; and
to receive an Authentication Response message returned by the user equipment, wherein the Authentication Response message is a message sent by the user equipment upon successful authentication on the selected one set of authentication vectors carried in the received Authentication Request message, and the Authentication Response message carries an Expected Response (XRES) parameter; and to compare the XRES parameter in the received Authentication Response message with a locally stored XRES parameter, and if they are consistent, to determine successful authentication; otherwise, to determine unsuccessful authentication; and
authentication and security unit (1102) configured to perform the security procedure between the MME and the user equipment is further configured:
to generate an integrity protection key and an encryption key using a key and to send a Security Mode Command message to the user equipment upon determining successful authentication, wherein the Security Mode Command message carries the integrity protection key and the encryption key; and
to receive a Security Mode Complete message returned by the user equipment, wherein the Security Mode Complete message is a message sent by the user equipment after successful integrity authentication on the integrity protection key and the encryption key upon reception of the Security Mode Command message; and to perform an Mobile Equipment (ME) Identity Check procedure with an Equipment Identity Register (EIR) to judge whether to allow the user equipment to be attached to the network side.

## Patentansprüche

1. Verfahren für den Anschluss an ein E-UTRAN (Evolved-Universal Terrestrial Radio Access Network), wobei das Verfahren umfasst:
einen Schritt A des Abrufens, auf Netzseite, von Kontextinformationen einer Nutzerausrüstung bei Empfang einer Attach Request, die durch die Nutzerausrüstung gesendet wurde (21);
einen Schritt B des Durchführens, auf Netzseite, einer Authentifizierungsprozedur und einer Sicherheitsprozedur mit der Nutzerausrüstung (22);
einen Schritt C des Aufbauens, auf Netzseite, von Tunneln mit der Nutzerausrüstung zur Informationsübertragung (23); und
einen Schritt D des Aufbauens, auf der Netzseite, eines Standardträgers mit der Nutzerausrüstung (24),
wobei Schritt D durchgeführt wird, wenn festgestellt wird, dass der Schritt B und der Schritt C erfolgreich durchgeführt wurden;
**dadurch gekennzeichnet, dass**
Schritt B und Schritt C parallel durchgeführt werden, nachdem der Schritt A erfolgreich durchgeführt wurde,
der Schritt B und Schritt C Teilschritte umfassen,
wenn einer der Teilschritte in Schritt B nicht erfolgreich durchgeführt wird, Schritt C und Schritt B nicht weiter durchgeführt werden; und
falls einer der Teilschritte in dem Schritt C nicht erfolgreich durchgeführt wird, der Schritt C und der Schritt B nicht weiter durchgeführt werden.

2. Verfahren nach Anspruch 1, wobei der Schritt A ferner umfasst:
einen Schritt A1 des Empfangens, durch eine Basisstation auf der Netzseite, der Attach Request und einer durch die Nutzerausrüstung gesendeten Netzauswahlangabe (211);
einen Schritt A2 des Bestimmens, durch die Basisstation, einer MME (Mobility Management Entity) gemäß der Attach Request and der Netzauswahlangabe, und Weiterleiten der Attach Request an die bestimmte MME (212);
einen Schritt A3 des Sendens, durch die MME, einer Identity Request Nachricht, die Informationen der Nutzerausrüstung über eine IMSI (International Mobile Subscriber Identity) anfragt, an die Nutzerausrüstung, wenn die MME bestimmt, dass sich die Attach Request auf einen Anschluss vermittels einer ungültigen GUTI (Globally Unique Temporary UE Identity) bezieht, und es keine lokal gespeicherte Kontext-Information der Nutzerausrüstung gibt (213); und
einen Schritt A4 des Empfangens, durch die MME, einer Identity Response Nachricht, die die IMSI-Informationen der Nutzerausrüstung trägt, welche von der Nutzerausrüstung zurückgesendet wurde (214).

3. Verfahren nach Anspruch 2, wobei der Schritt B ferner umfasst:
einen Schritt B1 des Sendens, durch die MME, einer Authentication Information Request Nachricht, die Authentifizierungsvektoren anfragt, an einen HSS (Home Subscriber Server) (221);
einen Schritt B2 des Empfanges, durch die MME, einer Authentication Information Reply Nachricht, die durch die HSS zurückgesendet wurde, wobei die Authentication Information Reply Nachricht mehrere Sätze von Authentifizierungsvektoren trägt (222);
einen Schritt B3 des Auswählens, durch die MME, eines Satzes von Authentifizierungsvektoren aus den mehreren Sätzen von Authentifizierungsvektoren, die in der Authentication Information Reply Nachricht getragen werden, und Sendens einer Authentication Request an die Nutzerausrüstung, wobei die Authentication Request den ausgewählten Satz an Authentifizierungsvektoren trägt (223);
einen Schritt B4 des Empfangens, durch die MME, einer Authentication Response Nachricht, die durch die Nutzerausrüstung zurückgesendet wurde, wobei die Authentication Response Nachricht eine Nachricht ist, die durch die Nutzerausrüstung nach erfolgreicher Authentifizierung auf dem ausgewählten Satz von Authentifizierungsvektoren gesendet wurde, die in der empfangenen Authentication Request Nachricht getragen werden, und die Authentication Response Nachricht einen XRES (Expected Response) Parameter trägt (224);
einen Schritt B5 des Vergleichens, durch die MME, des XRES Parameter, der in der empfangen Authentication Response Nachricht getragen wird, mit einem lokal gespeicherten XRES-Parameter, und falls sie übereinstimmen, dann Bestimmen einer erfolgreichen Authentifizierung, Erzeugen eines Integritätsschutzschlüssels und eines Verschlüsselungsschlüssels mittels eines Schlüssels und Senden einer Security Mode Command Nachricht an die Nutzerausrüstung, wobei die Security Mode Command Nachricht den Integritätsschutzschlüssel und den Verschlüsselungsschlüssel trägt (225);
einen Schritt B6 des Empfangens, durch die MME, einer Security Mode Complete Nachricht, die durch die Nutzerausrüstung zurückgesendet wird, wobei die Security Mode Complete Nachricht eine Nachricht ist, die durch die Nutzerausrüstung nach erfolgreicher Integritätsauthentifizierung auf dem Integritätsschutzschlüssel und dem Verschlüsselungsschlüssel bei Empfang der Security Mode Command Nachricht gesendet wird (226);
einen Schritt B7 des Durchführens, durch die MME, eines Mobile Equipment (ME) Identity Check Vorgangs mit eines Equipment Identity Register (EIR), um zu beurteilen, ob es der Nutzerausrüstung zu erlauben ist, mit der Netzseite verbunden zu werden (227).

4. Verfahren nach Anspruch 3, wobei zwischen Schritt B6 und Schritt B7, das Verfahren ferner umfasst:
einen Schritt B61 des Sendens, durch die MME, einer Identity Request Nachricht, die Informationen zur International Mobile Equipment Identity (IMEI) der Nutzerausrüstung anfordert, an die Nutzerausrüstung, wobei die Identity Request Nachricht die Identitätstypinformationen trägt (226a); und
einen Schritt B62 des Empfangens, durch die MME, der IMEI Informationen entsprechend der Identitätstypinformationen, die durch die Nutzerausrüstung zurückgesendet wurden (226b).

5. Verfahren nach Anspruch 3, wobei der Schritt C ferner umfasst:
einen Schritt C1 des Sendens, durch die MME, einer Update Location Request Nachricht an die HSS (231);
einen Schritt C2 des Empfangens, durch die MME, einer Update Location Answer Nachricht, die durch die HSS zurückgesendet wurde, und falls die MME aus der Update Location Answer Nachricht bestimmt, dass eine Ortsaktualisierung durch die HSS zurückgewiesen wird, dann Zurückweisen, durch die MME, des aktuellen Anschlusses der Nutzerausrüstung, und Stoppen der Fortführung; andernfalls Voranschreiten zu den nachfolgenden Schritten (232);
einen Schritt C3 des Auswählens, durch die MME, eines Serving Gateway (SGW) und Senden einer Create Session Request Nachricht an das ausgewählte SGW (233);
einen Schritt C4 des Erzeugens, durch das SGW, eines Eintrags in einer Liste von Evolved Packet Core (EPC) Trägern der SGW und Senden der Create Session Request Nachricht an ein PDN Gateway (PGW) bei Erhalt der Create Session Request Nachricht (234);
einen Schritt C5 des Empfangens, durch das SGW, einer Create Session Response Nachricht, die durch das PGW zurückgesendet wird (235); und
einen Schritt C6 des Zurücksendens, durch das SGW, der Create Session Response Nachricht an die MME (236).

6. Verfahren nach Anspruch 5, wobei es eine Policy Control and Charging Rule Function (PCRF) Einheit in Verwendung auf der Netzseite gibt, wobei das Verfahren ferner zwischen dem Schritt C4 und dem Schritt C5 umfasst:
einen Schritt C41 des Abrufens, durch das PGW, einer Policy and Charging Control (PCC) Regel von der PCRF Einheit, wobei die PCC Regel eine Regel ist, die in dem PGW für einen aufzubauenden EPS Träger vordefiniert ist (234a).

7. Verfahren nach Anspruch 5, wobei der Schritt D ferner umfasst:
einen Schritt D1 des Sendens, durch die MME, einer Attach Accept Nachricht an die Basisstation (241);
einen Schritt D2 des Sendens, durch die Basisstation, einer Radio Resource Control (RRC) Connection Reconfiguration Nachricht an die Nutzerausrüstung und Weiterleiten der empfangenen Attach Accept Nachricht an die Nutzerausrüstung (242);
einen Schritt D3 des Empfangens, durch die Basisstation einer Connection Reconfiguration Complete Nachricht, die durch die Nutzerausrüstung zurückgesendet wurde (243);
einen Schritt D4 des Sendens, der Basisstation, einer Initial Context Setup Response Nachricht der Basisstation an die MME (244);
einen Schritt (D5) des Empfangens, durch die Basisstation, einer Direct Transfer Nachricht, die eine Attach Complete Nachricht trägt, die durch die Nutzerausrüstung gesendet wird, und Weiterleiten der Attach Complete Nachricht an die MME (245);
einen Schritt D6 des Sendens, durch die MME, einer Modify Bearer Request Nachricht an die SGW (246);
einen Schritt D7 des Empfangens, durch die MME, einer Modify Bearer Response Nachricht, die durch die SGW zurückgesendet wird, Aufbauen eines EPS Trägers und
Senden einer Notify Request Nachricht an die HSS, wobei die Notify Request Nachricht Access Point Name (APN) Informationen und PGW Kennungsinformationen zum Mobilitätsmanagement der UE trägt (247);
einen Schritt D8 des Speicherns, durch die HSS, der APN Informationen und der PGW Kennungsinformationen und Aufbauen einer Entsprechungsbeziehung zwischen der APN Informationen und der PGW Kennungsinformationen, und Zurücksenden einer Notify Response Nachricht an die MME, um den Abschluss des aktuellen Anschlusses anzuzeigen (248).

8. Verfahren nach Anspruch 7, wobei, wenn die MME die Modify Bearer Request Nachricht, die eine Handover Indication trägt, an das SGW sendet, das Verfahren ferner zwischen Schritt D6 und D6 umfasst:
einen Schritt D61 des Sendens, durch das SGW, der Modify Bearer Request Nachricht an das PGW (246a);
einen Schritt D62 des Empfangens, durch das SGW, der Modify Bearer Response Nachricht, die durch das SGW zurückgesendet wurde (246b).

9. Verfahren nach Anspruch 5, wobei bevor Schritt C nicht weiter durchgeführt wird, falls der Schritt C4 durchgeführt wurde, dann die MME eine Delete Session Request an das SGW bzw. das PGW sendet, um das SGW und das PGW anzuweisen, eine aufgebaute Sitzung zu löschen, und eine Attach Reject Nachricht an die Nutzerausrüstung sendet; und
bevor Schritt C nicht weiter durchgeführt wird, falls der Schritt C4 nicht durchgeführt wurde, dann die MME unmittelbar eine Attach Reject Nachricht an die Nutzerausrüstung sendet.

10. Verfahren nach Anspruch 5, wobei die MME die Attach Reject Nachricht an die Nutzerausrüstung sendet, wobei die Attach Reject Nachricht einen Cause Wert trägt.

11. Mobilitätsverwaltungseinheit (MME), wobei die MME eine Kontextinformations-Abrufeinheit, eine Authentifizierungs- und Sicherheitseinheit, eine Tunnelaufbaueinheit, eine Standardträgereinheit und eine Steuereinheit aufweist, wobei:
die Kontextinformations-Abrufeinheit (1101) eingerichtet ist, Kontextinformationen einer Nutzerausrüstung bei Empfang einer durch die Nutzerausrüstung gesendeten Attach Request abzurufen;
die Authentifizierungs- und Sicherheitseinheit (1192) eingerichtet ist, einen Authentifizierungsvorgang und einen Sicherheitsvorgang zwischen der MME und der Nutzerausrüstung durchzuführen;
die Tunnelaufbaueinheit (1103) eingerichtet ist, Tunnel mit der Nutzerausrüstung zur Informationsübertragung aufzubauen;
die Standardträgereinheit (1104) eingerichtet ist, einen Standardträger mit der Nutzerausrüstung aufzubauen; und
die Standardträgereinheit zum Betrieb zu starten, nach sowohl die Authentifizierungs-und Sicherheitseinheit als auch die Tunnelaufbaueinheit erfolgreich betrieben wurden; **dadurch gekennzeichnet, dass**
die Steuereinheit (1105) eingerichtet ist, die Authentifizierungs- und Sicherheitseinheit und die Tunnelaufbaueinheit zum Betrieb parallel zu starten, nachdem die Kontextinformations-Abrufeinheit erfolgreichen betrieben wurde; die Steuereinheit (1105) ferner eingerichtet ist, die Tunnelaufbaueinheit (1103) anzuweisen, den Betrieb zu stoppen, wenn die Authentifizierungs-und Sicherheitseinheit (1102) nicht erfolgreich betrieben wird; und
die Authentifizierungs- und Sicherheitseinheit (1102) anzuweisen, den Betreib zu stoppen, wenn die Tunnelaufbaueinheit (1103) nicht erfolgreich betrieben wird.

12. Mobilitätsverwaltungseinheit nach Anspruch 11, wobei die Kontextinformation-Abrufeinheit (1103) ferner eingerichtet ist, um:
die durch die Nutzerausrüstung gesendete Attach Request durch eine die Nutzerausrüstung bedienende Basisstation zu empfangen;
eine Identity Request Nachricht, die Internation Mobile Subscriber Identity (IMSI) Informationen der Nutzerausrüstung anfragt, an die Nutzerausrüstung zu senden, bei Bestimmen, dass die Attach Request den Anschluss mithilfe einer ungültigen Globally Unique Temporary UE Identity (GUTI) betrifft und es keine lokal gespeicherten Kontextinformationen der Nutzerausrüstung gibt; und
eine Identity Response Nachricht zu empfangen, welche die IMSI Informationen der Nutzerausrüstung trägt, die durch die Nutzerausrüstung zurückgesendet wurden.

13. Mobilitätsverwaltungseinheit nach Anspruch 12, wobei die Authentifizierungs- und Sicherheitseinheit (1102) eingerichtet ist, den Authentifizierungsprozess zwischen der MME durchzuführen und die Nutzerausrichtung ferner eingerichtet ist:
eine Authentication Information Request Nachricht, die Authentifizierungsvektoren anfordert, an einem Home Subscriber Server (HSS) zu senden;
eine Authentication Information Answer Nachricht, die von dem HSS zurückgesendet wird, zu empfangen, wobei die Authentication Information Answer Nachricht mehrere Sätze von Authentifizierungsvektoren trägt; und einen Satz der Authentifizierungsvektoren aus den mehreren Sätzen von Authentifizierungsvektoren auszuwählen und eine Authentication Request an die Nutzerausrüstung zu senden, wobei die Authentication Request den ausgewählten Satz von Authentifizierungsvektoren trägt; und
eine Authentication Response Nachricht, die durch die Nutzerausrüstung zurückgesendet wird, zu empfangen, wobei die Authentication Response Nachricht eine Nachricht ist, die durch die Nutzerausrüstung bei erfolgreicher Authentifizierung auf dem ausgewählten Satz von Authentifizierungsvektoren, die in der empfangenen Authentication Request Nachricht getragen werden, gesendet wird, und die Authentication Response Nachricht einen Expected Response (XRES) Parameter trägt; und den XRES Parameter in der empfangenen Authentication Response Nachricht mit einem lokal gespeicherten XRES Parameter zu vergleichen, und falls diese übereinstimmen, eine erfolgreiche Authentifizierung zu bestimmen; andernfalls eine nicht erfolgreiche Authentifizierung zu bestimmen; und
Authentifizierungs- und Sicherheitseinheit (1102) die eingerichtet ist, den Sicherheitsprozess zwischen der MME und der Nutzerausrüstung durchzuführen, ferner eingerichtet ist:
einen Integritätsschutzschlüssel und einen Verschlüsselungsschlüssel mittels eines Schlüssels zu erzeugen und eine Security Mode Command Nachricht an die Nutzerausrüstung bei Feststellen einer erfolgreichen Authentifizierung zu senden, wobei die Security Mode Command Nachricht den Integritätsschutzschlüssel und den Verschlüsselungsschlüssel trägt; und
eine Security Mode Complete Nachricht, die von der Nutzerausrüstung zurück gesendet wird, zu empfangen, wobei die Security Mode Complete Nachricht eine Nachricht ist, die durch die Nutzerausrüstung nach erfolgreicher Integritätsauthentifizierung auf dem Integritätsschutzschlüssel und dem Verschlüsselungsschlüssel bei Erhalt der Security Mode Command Nachricht gesendet wird; und einen Mobile Equipment (ME) Identity Check Prozess mit einem Equipment Identity Register (EIR) durchzuführen, um zu beurteilen, ob der Nutzerausrüstung der Anschluss an die Netzseite zu gestatten ist.

## Revendications

1. Procédé destiné à rattacher un réseau d'accès radio terrestre UMTS évolué (E-UTRAN, Evolved-Universal Terrestrial Radio Acess Network), le procédé comprenant :
une étape A pour récupérer côté réseau des informations de contexte d'un équipement d'utilisateur (UE, User Equipment) suite à la réception d'une demande de rattachement envoyée par l'équipement d'utilisateur (21) ;
une étape B pour exécuter côté réseau une procédure d'authentification et une procédure de sécurité avec l'équipement d'utilisateur (22) ;
une étape C pour établir côté réseau des tunnels avec l'équipement d'utilisateur pour une transmission d'informations (23), et
une étape D pour établir côté réseau un porteur par défaut avec l'équipement d'utilisateur (24),
dans lequel l'étape D est exécutée suite à la détermination que l'étape B et l'étape C sont exécutées avec succès,
**caractérisé en ce que**
l'étape B et l'étape C sont exécutées en parallèle après l'exécution avec succès de l'étape A,
l'étape B et l'étape C incluent des sous-étapes ;
lorsque l'une quelconque des sous-étapes de l'étape B est exécutée sans succès, l'exécution plus avant de l'étape C et de l'étape B est arrêtée, et
lorsque l'une quelconque des sous-étapes de l'étape C est exécutée sans succès, l'exécution de l'étape C et de l'étape B est arrêtée.

2. Procédé selon la revendication 1, dans lequel l'étape A comprend en outre :
une étape A1 pour recevoir, par une station de base côté réseau, la demande de rattachement et une indication de sélection de réseau envoyées par l'équipement d'utilisateur (211) ;
une étape A2 pour déterminer, par la station de base, une entité de gestion de mobilité (MME, Mobility Management Entity) en fonction de la demande de rattachement et de l'indication de sélection de réseau, et transférer la demande de rattachement à la MME déterminée (212) ;
une étape A3 pour envoyer, par la MME, un message de demande d'identité demandant des informations d'identité internationale d'abonnement mobile (IMSI, International Mobile Subscriber Identity) de l'équipement d'utilisateur à l'équipement d'utilisateur lorsque la MME détermine que la demande de rattachement est liée à un rattachement à l'aide d'une identité UE temporaire unique dans le monde (GUTI, Globally Unique Temporary UE Identity) et qu'il n'existe aucune information de contexte stockée localement de l'équipement d'utilisateur (213), et
une étape A4 pour recevoir, par la MME, un message de réponse d'identité, portant les informations IMSI de l'équipement d'utilisateur, retourné par l'équipement d'utilisateur (214).

3. Procédé selon la revendication 2, dans lequel l'étape B comprend en outre :
une étape B1 pour envoyer, par la MME, un message de demande d'informations d'authentification demandant des vecteurs d'authentification à un serveur Home Subscriber Server (HSS) (221) ;
une étape B2 pour recevoir, par la MME, un message de réponse d'informations d'authentification retourné par le HSS, dans lequel le message de réponse d'informations d'authentification porte de multiples jeux de vecteurs d'authentification (222) ;
une étape B3 pour sélectionner, par la MME, un jeu de vecteurs d'authentification parmi les multiples jeux de vecteurs d'authentification portés dans le message de réponse d'informations d'authentification, et pour envoyer une demande d'authentification à l'équipement d'utilisateur, dans lequel la demande d'authentification porte le jeu sélectionné des vecteurs d'authentification (223) ;
une étape B4 pour recevoir, par la MME, un message de réponse d'authentification retourné par l'équipement d'utilisateur, dans lequel le message de réponse d'authentification est un message envoyé par l'équipement d'utilisateur suite à l'authentification avec succès sur le un jeu sélectionné des vecteurs d'authentification portés dans le message de demande d'authentification reçu, et le message de réponse d'authentification porte un paramètre (224) de réponse attendue (XRES, Expected Answer) ;
une étape B5 pour comparer, par la MME, le paramètre XRES porté dans le message de réponse d'authentification reçu avec un paramètre XRES stocké localement, et s'ils sont cohérents, pour alors déterminer une authentification avec succès, générer une clé de protection d'intégrité et une clé de chiffrement à l'aide d'une clé, et envoyer un message de commande de mode de sécurité à l'équipement d'utilisateur, dans lequel le message de commande de mode de sécurité porte la clé de protection d'intégrité et la clé de chiffrement (225) ;
une étape B6, par la MME, pour recevoir un message de mode de sécurité complet retourné par l'équipement d'utilisateur, dans lequel le message de mode de sécurité complet est un message envoyé par l'équipement d'utilisateur après l'authentification d'intégrité avec succès sur la clé de protection d'intégrité et la clé de chiffrement suite à la réception du message de commande de mode de sécurité (226) ;
une étape B7 pour exécuter, par la MME, une procédure de vérification d'identité d'équipement mobile (ME, Mobile Equipment) avec un registre d'identité d'équipement (Equipment Identity Register, EIR) afin de juger si l'on peut autoriser le rattachement de l'équipement d'utilisateur au côté réseau (227).

4. Procédé selon la revendication 3, dans lequel entre l'étape B6 et l'étape B7, le procédé comprend en outre :
une étape B61 pour envoyer, par la MME, un message de demande d'identité demandant des informations d'identité internationale d'équipement mobile (IMEI, International Mobile Equipment Identity) de l'équipement d'utilisateur à l'équipement d'utilisateur, dans lequel le message de demande d'identité porte des informations de type d'identité (226a), et
une étape B62 pour recevoir, par la MME, les informations IMEI correspondant aux informations de type d'identité retournées par l'équipement d'utilisateur (226b).

5. Procédé selon la revendication 3, dans lequel l'étape C comprend en outre :
une étape C1 pour envoyer, par la MME, un message de demande de mise à jour de localisation au HSS (231) ;
une étape C2 pour recevoir, par la MME, un message de réponse de mise à jour de localisation retourné par le HSS, et si la MME détermine à partir du message de réponse de mise à jour de localisation qu'une mise à jour de localisation est rejetée par le HSS, alors pour rejeter, par la MME, le rattachement actuel de l'équipement d'utilisateur, et arrêter le déroulement ; sinon déroulement avec les étapes subséquentes (232) ;
une étape C3 pour sélectionner, par la MME, une passerelle SGW (Serving Gateway), et envoyer un message de demande de création de session à la SGW sélectionnée (233) ;
une étape C4 pour créer, par la SGW, une entrée dans une liste de porteurs de coeur EPC (Evolved Packet Core) de la SGW, et pour envoyer le message de demande de création de session à une passerelle PDN (PGW) suite à la réception du message de demande de création de session (234) ;
une étape C5 pour recevoir, par la SGW, un message de réponse de création de session retourné par la PGW (235), et
une étape C6 pour retourner, par la SGW, le message de réponse de création de session à la MME (236).

6. Procédé selon la revendication 5, dans lequel lorsqu'il existe une entité de fonction PCRF (Policy Control and Charging Rule Function) utilisée côté réseau, le procédé comprend en outre entre l'étape C4 et l'étape C5 :
une étape C41 pour récupérer, par la PGW, une règle PCC (Policy and Charging Control) à partir de l'entité PCRF, dans lequel la règle PCC est une règle prédéfinie dans le PGW par le porteur EPS à établir (234a).

7. Procédé selon la revendication 5, dans lequel l'étape D comprend en outre :
une étape D1 pour envoyer, par la MME, un message d'acceptation de rattachement à la station de base (241) ;
une étape D2 pour envoyer, par la station de base, un message de reconfiguration de connexion RRC (Radio Resource Control) à l'équipement d'utilisateur, et transférer le message d'acceptation de rattachement reçu à l'équipement d'utilisateur (242) ;
une étape D3 pour recevoir, par la station de base, un message de reconfiguration de connexion complète retourné par l'équipement d'utilisateur (243) ;
une étape D4 pour envoyer, par la station de base, un message de réponse de paramétrage de contexte initial de la station de base à la MME (244) ;
une étape D5 pour recevoir, par la station de base, un message de transfert direct, portant un message de rattachement complet, envoyé par l'équipement d'utilisateur, et pour transférer le message de rattachement complet à la MME (245) ;
une étape D6 pour envoyer, par la MME, un message de demande de modification de porteur à la SGW (246) ;
une étape D7 pour recevoir, par la MME, un message de réponse de modification de porteur par la SGW, pour établir un porteur EPS, et pour envoyer un message de demande de notification au HSS, dans lequel le message de demande de notification porte des informations de nom de point d'accès de réseau (Access Point Name, APN) et des informations d'identifiant PGW pour la gestion de mobilité de l'UE (247), et une étape D8 pour stocker, par le HSS, les informations APN et les informations d'identifiant de PGW, et pour établir une relation de correspondance entre les informations APN et les informations d'identifiant PGW, et pour retourner un message de réponse de notification à la MME afin d'indiquer que le rattachement actuel (248) est complet.

8. Procédé selon la revendication 7, dans lequel lorsque la MME envoie le message de demande de modification de porteur portant une indication de transfert intercellulaire à la SGW, le procédé comprend en outre entre l'étape D6 et l'étape D6 :
une étape D61 pour envoyer, par la SGW, le message de demande de modification de porteur à la PGW (246a), et
une étape D62 pour recevoir, par la SGW, le message de réponse de modification de porteur retourné par la SGW (246b).

9. Procédé selon la revendication 5, dans lequel avant arrêt de l'exécution de l'étape C, si l'étape C4 a été exécutée, alors la MME envoie une demande d'effacement de session respectivement à la SGW et la PGW, afin d'ordonner à la SGW et la PGW d'effacer une session établie, et envoie un message de rejet de rattachement à l'équipement d'utilisateur, et
avant arrêt de l'exécution de l'étape C, si l'étape C4 n'a pas été exécutée, alors la MME envoie directement un message de rejet de rattachement à l'équipement d'utilisateur.

10. Procédé selon la revendication 5, dans lequel la MME envoie le message de rejet de rattachement à l'équipement d'utilisateur, et dans lequel le message de rejet de rattachement porte une valeur de cause.

11. Entité de gestion de mobilité (MME), la MME comprenant une unité de récupération d'informations de contexte, une unité d'authentification et de sécurité, une unité d'établissement de tunnel, une unité de porteur par défaut, et une unité de commande, dans laquelle :
l'unité de récupération d'informations de contexte (1101) est configurée pour récupérer des informations de contexte d'un équipement d'utilisateur suite à la réception d'une demande de rattachement envoyée par l'équipement d'utilisateur ;
l'unité d'authentification et de sécurité (1102) est configurée pour exécuter une procédure d'authentification et une procédure de sécurité entre la MME et l'équipement d'utilisateur ;
l'unité d'établissement de tunnel (1103) est configurée pour établir des tunnels avec l'équipement d'utilisateur pour une transmission d'informations ;
l'unité de porteur par défaut (1104) est configurée pour établir un porteur par défaut avec l'équipement d'utilisateur, et
pour lancer le fonctionnement de l'unité de porteur par défaut après fonctionnement avec succès à la fois de l'unité d'authentification et de sécurité et de l'unité d'établissement de tunnel ;
**caractérisé en ce que**
l'unité de commande (1105) est configurée pour lancer le fonctionnement de l'unité d'authentification et de sécurité et de l'unité d'établissement de tunnel en parallèle après le fonctionnement avec succès de l'unité de récupération d'informations de contexte ;
l'unité de commande (1105) est en outre configurée pour ordonner à l'unité d'établissement de tunnel (1103) d'arrêter de fonctionner lorsque l'unité d'authentification et de sécurité (1102) fonctionne sans succès, et
pour ordonner à l'unité d'authentification et de sécurité (1102) d'arrêter de fonctionner lorsque l'unité d'établissement de tunnel (1103) fonctionne sans succès.

12. Entité de gestion de mobilité selon la revendication 11, dans laquelle l'unité de récupération d'informations de contexte (1101) est en outre configurée pour :
recevoir la demande de rattachement envoyée par l'équipement d'utilisateur par le biais d'une station de base desservant l'équipement d'utilisateur ;
envoyer un message de demande d'identité demandant des informations d'identité internationale d'abonnement mobile (IMSI, International Mobile Subscriber Identity) de l'équipement d'utilisateur à l'équipement d'utilisateur suite à la détermination que la demande de rattachement est liée à un rattachement à l'aide d'une identité UE temporaire unique dans le monde (GUTI, Globally Unique Temporary UE Identity) et qu'il n'existe aucune information de contexte stockée localement de l'équipement d'utilisateur, et
recevoir un message de réponse d'identité, portant les informations IMSI de l'équipement d'utilisateur, retourné par l'équipement d'utilisateur.

13. Entité de gestion de mobilité selon la revendication 12, dans laquelle l'unité d'authentification et de sécurité (1102), configurée pour exécuter une procédure d'authentification entre la MME et l'équipement d'utilisateur, est en outre configurée pour :
envoyer un message de demande d'informations d'authentification demandant des vecteurs d'authentification à un serveur Home Subscriber Server (HSS) ;
recevoir un message de réponse d'informations d'authentification retourné par le HSS, dans laquelle le message de réponse d'informations d'authentification porte de multiples jeux de vecteurs d'authentification, pour sélectionner un jeu des vecteurs d'authentification parmi les multiples jeux de vecteurs d'authentification, et pour envoyer une demande d'authentification à l'équipement d'utilisateur, dans laquelle la demande d'authentification porte le jeu sélectionné des vecteurs d'authentification, et recevoir un message de réponse d'authentification retourné par l'équipement d'utilisateur, dans laquelle le message de réponse d'authentification est un message envoyé par l'équipement d'utilisateur suite à l'authentification avec succès sur le un jeu sélectionné des vecteurs d'authentification porté dans le message de demande d'authentification reçu, et le message de réponse d'authentification porte un paramètre de réponse attendue (XRES), et
comparer le paramètre XRES dans le message de réponse d'authentification reçu avec un paramètre XRES stocké localement, et s'ils sont cohérents, pour déterminer une authentification avec succès, sinon, pour déterminer une authentification sans succès, et
l'unité d'authentification et de sécurité (1102), configurée pour exécuter la procédure de sécurité entre la MME et l'équipement d'utilisateur, est en outre configurée pour :
générer une clé de protection d'intégrité et une clé de chiffrement à l'aide d'une clé, et envoyer un message de commande de mode de sécurité à l'équipement d'utilisateur suite à la détermination d'une authentification avec succès, dans laquelle le message de commande de mode de sécurité porte la clé de protection d'intégrité et la clé de chiffrement, et
recevoir un message de mode de sécurité complet retourné par l'équipement d'utilisateur, dans laquelle le message de mode de sécurité complet est un message envoyé par l'équipement d'utilisateur après l'authentification d'intégrité avec succès sur la clé de protection d'intégrité et la clé de chiffrement suite à la réception du message de commande de mode de sécurité, et pour exécuter une procédure de vérification d'identité d'équipement mobile (ME) avec un registre d'identité d'équipement (EIR) afin de juger si l'on peut autoriser le rattachement de l'équipement d'utilisateur du côté réseau.
